# EUROPEAN PATENT SPECIFICATION

(11) **EP 4 116 116 B1**
(45) Date of publication and mention of the grant of the patent: **05.03.2025**
(21) Application number: 22178864.9
(22) Date of filing: 14.06.2022
(51) Int. Cl.: B60G 9/02, B60G 11/26, B62D 21/11

(54) **RIGID AXLE WITH HYDRAULIC SUSPENSION FOR A TRAILER OF A VEHICLE WITH A LOAD-BEARING FRAME CONNECTING TO THE FRAME OF SAID TRAILER**
STARRE ACHSE MIT HYDRAULISCHER AUFHÄNGUNG FÜR EINEN ANHÄNGER EINES FAHRZEUGS MIT EINEM LASTTRAGENDEN RAHMEN, DER MIT DEM RAHMEN DES ANHÄNGERS VERBUNDEN IST
ESSIEU RIGIDE DOTÉ D'UNE SUSPENSION HYDRAULIQUE POUR UNE REMORQUE D'UN VÉHICULE AVEC UNE STRUCTURE PORTEUSE À CONNECTER AU CADRE DE LADITE REMORQUE

(30) Priority: 05.07.2021 IT 202100017705
(43) Date of publication of application: 11.01.2023
(73) Proprietor: A.D.R. S.p.A., 20151 Milano (IT)
(72) Inventor: RADRIZZANI, Flavio, 21040 Uboldo (Varese) (IT)
(74) Representative: Rapisardi, Mariacristina

(56) References cited:
- EP-A1- 3 216 631
- WO-A1-2019/243476

## Description

The present invention relates to a rigid axle arrangement with hydraulic suspension of a trailer of a vehicle with a load-bearing frame fixable to the frame of the trailer. An example of such a rigid axle arrangement is disclosed in EP 3 216 631 A1.

A traditional rigid axle arrangement with hydraulic suspension generally comprises a main connecting axle of at least one pair of driven wheels, coupled directly to the vehicle frame by means of one or more typically longitudinal connecting arms, one or more hydraulic suspension cylinders and a cross bar reacting to transverse loads.

The hydraulic suspension is one of the mostly widespread suspensions on agricultural towed machines instead of the traditional mechanical leaf spring suspension.

A hydraulic suspension allows a homogeneous distribution of the weight of the vehicle on the wheels and therefore an optimal grip even in the presence of dynamic loads, because the hydraulic circuit keeps all the actuators at the same pressure.

A hydraulic suspension also allows to intervene on the travel height of the vehicle by acting on the volume of fluid in the actuators.

Finally, a hydraulic suspension optimizes the travel behaviour/comfort by coupling one or more elastic elements, such as inert gas accumulators, to the rigid hydraulic circuit.

Among other things, advantageously, the hydraulic supply system is now a standard feature for all tractors.

A type of hydraulic suspension is known where the upper end of the hydraulic suspension cylinder is fixed laterally to the load-bearing frame of the trailer while the lower end is connected below the axle on the forward side.

Another type of hydraulic suspension is also known where the upper end of the hydraulic suspension cylinder is fixed laterally to the load-bearing frame of the trailer in a higher position than the plane of the main body of the trailer, and the lower end is connected above the axle on the forward side.

There are also state-of-the-art solutions in which the hydraulic suspension has the hydraulic suspension cylinder arranged coplanarly under the side member of the load-bearing frame of the trailer, so that, with the same dimensions of the wheels and of the track with respect to the solutions previously described, it is possible to increase the spacing between the side member of the load-bearing frame of the trailer, because the hydraulic suspension cylinder is not interposed transversely between the driven wheel and the side member.

The latter solution benefits the torsional stiffness of the frame and does not apply any local twisting to the side members.

EP 3 216 631 A1 teaches an oil-hydraulic suspension for connecting a chassis to an axle of a vehicle, WO 2019/243476 A1 shows an axle arrangement for an agricultural baler.

One of the main drawbacks complained about by the trailer manufacturers in a vehicle and referred to the axles, typically to the axles with known hydraulic suspensions, consists in the fact that they are supplied as a set of components that must be assembled and fixed to the frame of the trailer. Each component must be coupled respecting the design geometries, and fixed with the appropriate and different fixing means characteristic of the various components to the frame of the trailer, generally consisting of longitudinal side members.

From a logistical and operational point of view, this leads to assembly complications that can significantly lengthen the times for setting up the axle on the trailer of the vehicle.

The technical task addressed by the present invention is accordingly to realise a rigid axle arrangement with hydraulic suspension for a trailer of a vehicle that enables the decried technical drawbacks of the prior art to be eliminated.

Within the scope of this technical task an object of the invention is to realise a rigid axle arrangement with hydraulic suspension for the trailer of a vehicle that can be set up on the frame of the trailer in a simple and fast way.

The technical task, as well as these and other purposes, according to the present invention are achieved by realising a rigid axle arrangement according to claim 1.

Preferred embodiments of the invention are defined in the dependent claims 2-9.

An independent module fixable to a frame of a trailer of a vehicle is also described, comprising a load-bearing frame, a rigid axle comprising at least one front connecting arm, a hydraulic suspension comprising at least a pair of right and left hydraulic cylinders of suspension, and at least one cross bar contrasting axial transverse loads acting on said rigid axle, wherein said rigid axle is connected by said at least one front connecting arm, at least said pair of right and left hydraulic cylinders and said cross bar directly to said load-bearing frame of said independent module.

A load-bearing frame is also described, comprising a right longitudinal plate and a left longitudinal plate that are rigidly connected at the front by a cross bar, said right longitudinal plate and said left longitudinal plate being directly fixable to the frame of said trailer.

Further characteristics and advantages of the invention will more fully emerge from the description of a preferred but not exclusive embodiment of a rigid axle arrangement with hydraulic suspension for a trailer of a vehicle according to the invention, illustrated by way of non-limiting example in the accompanying figures of the drawings, in which:

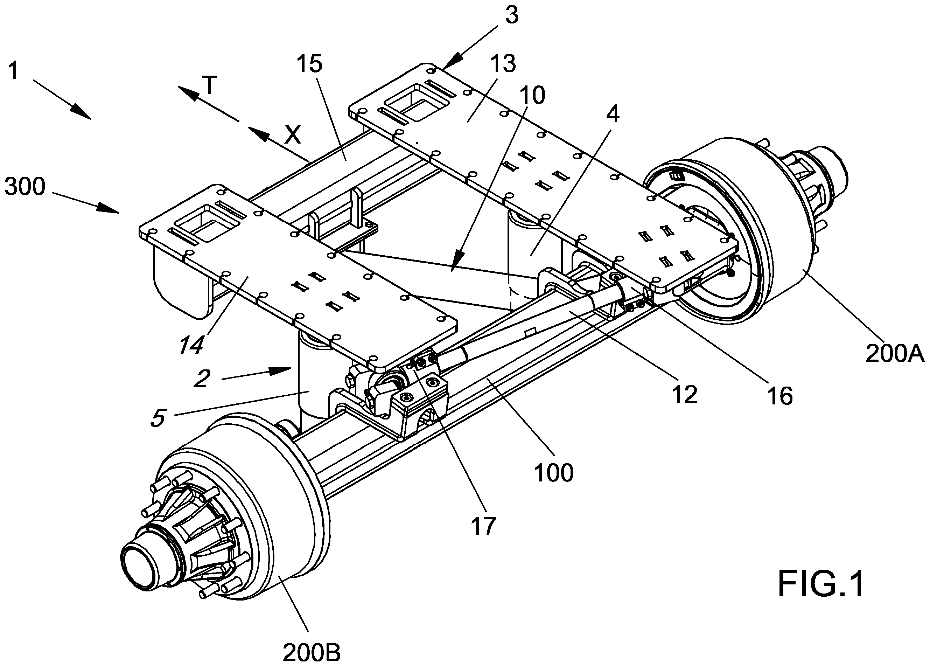

figure 1 represents an axonometric view of a rigid axle arrangement with hydraulic suspension for a trailer of a vehicle;

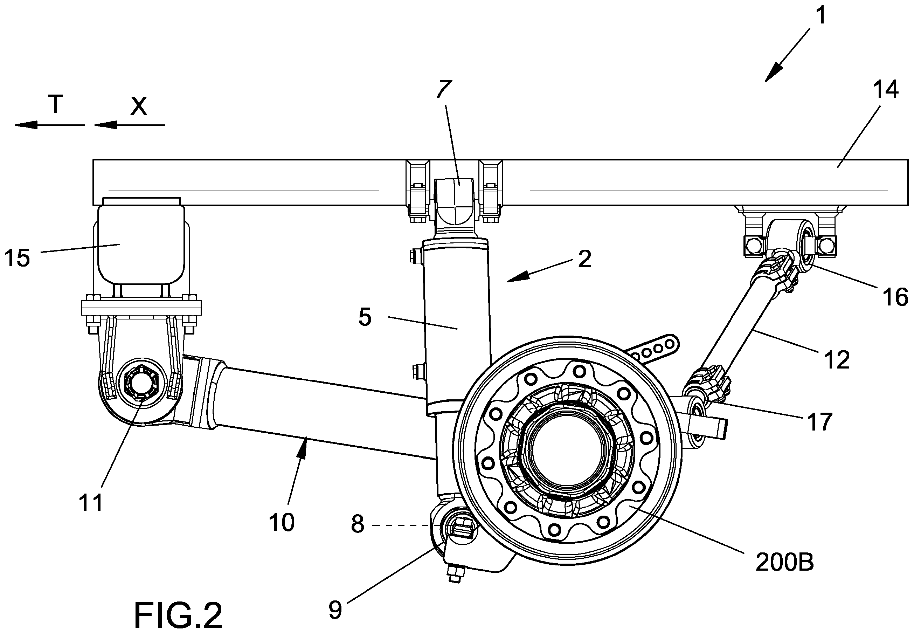

figure 2 represents a left side elevation view of a rigid axle arrangement with hydraulic suspension;

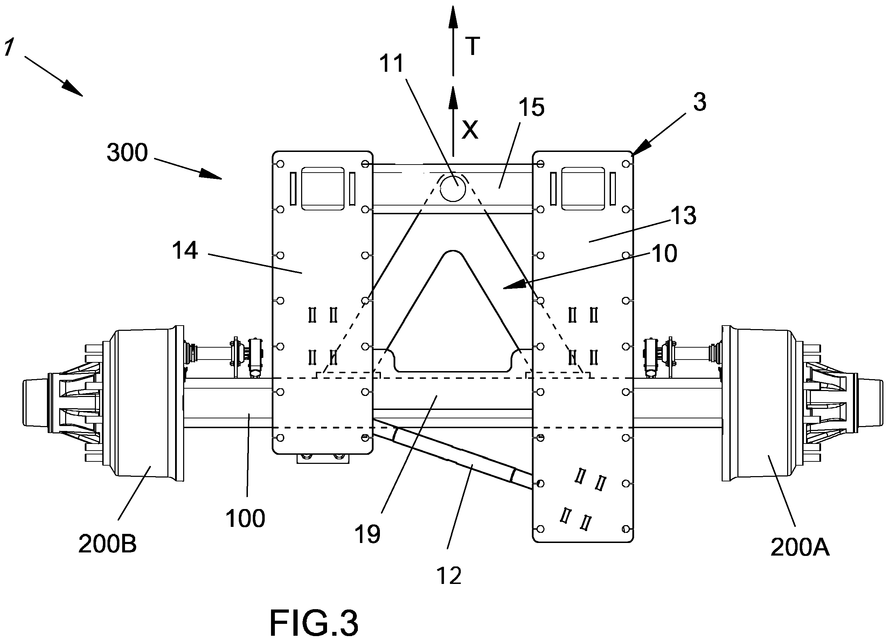

figure 3 represents a top view of a rigid axle arrangement with hydraulic suspension.

With reference to the aforementioned figures, a rigid axle arrangement with hydraulic suspension for a trailer of a vehicle is shown, as a whole indicated with the number 1.

The trailer is towed in the direction T, corresponding to the longitudinal axis X of the trailer.

The rigid axle arrangement 1 comprises at least one rigid connecting axle 100 of at least one pair of driven wheels, not shown for simplicity of the drawing, mounted on the hubs 200 A and 200 B. The rigid axle arrangement 1 comprises a hydraulic suspension 2 comprising at least one pair of hydraulic suspension cylinders, right cylinder 4 and left cylinder 5, and at least one cross bar 12 contrasting axial transverse loads acting on the rigid axle 1 in operation.

The rigid connecting axle 100 has at least one front connecting arm 10.

Innovatively and advantageously, according to the present invention, such at least one arm 10, such at least one pair of right 4 and left 5 suspension hydraulic cylinders and such at least one contrasting cross bar 12 are fixed to a load-bearing frame 3 of an independent module 300, fixable to the frame of the trailer, typically to the longitudinal side members of such a trailer.

The load-bearing frame 3 comprises a right longitudinal plate 13 and a left longitudinal plate 14 that are rigidly connected at the front by a cross member 15.

The right longitudinal plate 13 and the left longitudinal plate 14 are directly fixable to the longitudinal side members of the frame of the trailer, by means of known connecting means, not shown in the drawings, typically fixing bolts or welding points.

The right 13 and left 14 longitudinal plates are typically parallel to one another, and parallel to the longitudinal axis X of the trailer and orthogonal to the rigid connecting axle 100. Advantageously, the cross member 15 has in the centre, on the longitudinal axis X of the trailer, a central spherical joint 11 to which the front connecting arm 10 of the rigid connecting axle 100 is connected.

Suitably, in fact, according to the present invention, the arm 10 comprises a triangular structure hinged to the cross member 15 by the ball joint 11 and an opposite side 19 rigidly connected to the rigid connecting axle 100.

The right 4 and left 5 hydraulic cylinders of the suspension have an upper end 6 and 7 hinged respectively to the right longitudinal plate 13 and to the left longitudinal plate 14, and a lower end 8 and 9 hinged to the rigid connecting axle 100 near the wheel hubs 200 A and 200 B.

Typically, the lower ends 8 and 9 of the hydraulic cylinders 4 and 5 are hinged below and in front of the rigid connecting axle 100.

Typically, the lower ends 8 and 9 and the upper ends 6 and 7 of the hydraulic cylinders 4 and 5 are hinged with orthogonal hinge axes: the hinge axis of the lower ends 8 and 9 is parallel to the rigid connecting axle 100 and the hinge axis of the upper ends 6 and 7 is parallel to the longitudinal axis X of the trailer, parallel to the axis of the longitudinal plates 13 and 14.

The cross bar 12 connects the rigid axle 100 to the load-bearing frame 3: the cross bar 12 has in fact an upper end 16 hinged to one of the right 13 and left 14 longitudinal plates, and a lower end 17 hinged to the rigid connecting axle 100 in an opposite position, typically symmetrical, with respect to the longitudinal axis X.

The cross bar 12 is typically positioned behind the rigid connecting axle 100, and is hinged to one of the longitudinal plates 13 or 14 behind the hinge point of a cylinder 4 or 5 to said longitudinal plate 13 or 14.

With reference to the figures, the present invention therefore shows a rigid axle 1 with hydraulic suspension 2 for a trailer of a vehicle, comprising an independent module 300 fixable to a frame of a trailer of a vehicle.

Said independent module 300 comprises a load-bearing frame 3, a rigid connecting axle 100 comprising a front connecting arm 10, a hydraulic suspension 2 comprising at least one pair of right and left hydraulic suspension cylinders 4 and 5 and at least one cross bar 12 contrasting axial transverse loads acting on the rigid connecting axle 100.

Advantageously, according to the present invention, the rigid connecting axle 100 is connected by the front connecting arm 10, the pair of right 4 and left 5 hydraulic cylinders, and the cross bar 12 directly to the load-bearing frame 3 of the independent module 300: the independent module 300 thus configured is therefore directly fixable to the frame of the trailer by the right longitudinal plate 13 and the left longitudinal plate 14 of the load-bearing frame 3.

The operation of a rigid axle arrangement with hydraulic suspension for a trailer of a vehicle according to the invention is clear from what is described and illustrated and, in particular, is substantially as follows.

The components of the rigid axle with hydraulic suspension, indicatively but not limited to the load-bearing frame 3, the rigid connecting axle 100, the connecting arm 10, the pair of right 4 and left 5 hydraulic cylinders and the cross bar 12 are produced and/or assembled by the manufacturer of the rigid axle.

The rigid connecting axle 100 with the connecting arm 10, the pair of right 4 and left 5 hydraulic cylinders and the cross bar 12 are then connected to each other and with the drawing geometries to the load-bearing frame 3.

The independent module 300, consisting of the load-bearing frame 3 so suitably equipped, is supplied to the manufacturer of the trailer, who fixes it to the frame in a predetermined design position by means of simple known coupling means, typically bolts and/or welding points, between only the right longitudinal plate 13 and the left longitudinal plate 14 and the longitudinal side members of the trailer.

In practice, it has been found that a rigid axle with hydraulic suspension 1 for a trailer of a vehicle according to the invention is particularly advantageous such as to be able to be set up on the frame of the trailer in a simple and fast way.

The rigid axle arrangement with hydraulic suspension for vehicles thus conceived is susceptible to numerous modifications and variations, however, the invention is defined in the claims.

In practice, the materials used, as well as the dimensions, can be any according to the needs and the state of the art.

## Claims

1. A rigid axle arrangement (1) with hydraulic suspension (2) for a trailer of a vehicle, comprising at least one rigid connecting axle (100) of at least one pair of driven wheels, at least one front connecting arm (10) of said rigid connecting axle (100), at least one pair of right (4) and left (5) hydraulic suspension cylinders, and at least one cross bar (12) reacting to the axial transverse loads acting on said rigid connecting axle (100), **characterised in that** said at least one arm (10), said at least one pair of hydraulic suspension cylinders (4, 5) and said at least one cross bar (12) are reciprocally fixed to said rigid connecting axle (100) and to a load-bearing frame (3) fixable to the frame of said trailer, said load-bearing frame (3) comprising a right longitudinal plate (13) and a left longitudinal plate (14) that are rigidly connected at the front by a cross member (15), said right longitudinal plate (13) and said left longitudinal plate (14) being directly fixable to the frame of said trailer, said cross member (15) having a central spherical joint (11) to which said at least one arm (10) is connected, said arm (10) comprises a triangular structure hinged to said cross member (15) by said spherical joint (11) and an opposite side (19) rigidly connected to said rigid connecting axle (100).

2. The rigid axle arrangement (1) of a trailer of a vehicle according to the preceding claim, **characterised in that** said right (13) and left (14) longitudinal plates are parallel to one another and orthogonal to said rigid connecting axle (100).

3. The rigid axle arrangement (1) of a trailer of a vehicle according to any preceding claim, **characterised in that** said right (4) and left (5) hydraulic suspension cylinders have a respective upper end (6, 7) hinged respectively to said right longitudinal plate (13) and to said left longitudinal plate (14) and a lower end (8, 9) hinged to said rigid connecting axle (100).

4. The rigid axle arrangement (1) of a trailer according to any preceding claim, **characterised in that** said cross bar (12) has an upper end (16) hinged to one of said right and left longitudinal plates (13, 14) and a lower end (17) hinged to said rigid axle arrangement (1).

5. The rigid axle arrangement (1) of a trailer according to any preceding claim, **characterised in that** said cross bar (12) is positioned behind said rigid connecting axle (100).

6. The rigid axle arrangement (1) of a trailer of a vehicle according to the preceding claim, **characterised in that** said cross bar (12) is hinged to one of said right (13) or left (14) longitudinal plate behind at the upper hinging point of one of said right (4) or left (5) cylinder respectively to said right (13) or left (14) longitudinal plate.

7. The rigid axle arrangement (1) of a trailer of a vehicle according to any one of claims from 3 to 6, **characterised in that** said lower ends (8, 9) of said cylinders (4, 5) are positioned below and in front of said rigid connecting axle (100).

8. The rigid axle arrangement (1) of a trailer of a vehicle according to any one of preceding claims from 3 to 7, **characterised in that** said lower ends (8, 9) and said upper ends (6, 7) of said cylinders (4, 5) are hinged with orthogonal hinge axes.

9. The rigid axle arrangement (1) of a trailer of a vehicle according to the preceding claim, **characterised in that** the hinge axis of said lower ends (8, 9) of said cylinders (4, 5) is parallel to said rigid axle arrangement (1) and the hinge axis of said upper ends (6, 7) of said cylinders (4, 5) is parallel to the longitudinal axis of said longitudinal plates (13, 14).

## Patentansprüche

1. Eine starre Achsanordnung (1) mit Hydraulikfederung (2) für einen Anhänger eines Fahrzeugs, umfassend mindestens eine starre Verbindungsachse (100) eines mindestens einen Paars angetriebener Räder, mindestens einen vorderen Verbindungsarm (10) der genannten starren Verbindungsachse (100), mindestens ein Paar rechter (4) und linker (5) Hydraulikfederzylinder und mindestens eine Querstrebe (12), die auf die axialen Querkräfte reagiert, die auf die genannte starre Verbindungsachse (100) wirken, **dadurch gekennzeichnet, dass** der genannte mindestens eine Arm (10), das genannte mindestens eine Paar Hydraulikfederzylinder (4, 5) und die genannte mindestens eine Querstrebe (12) gegenseitig an der genannten starren Verbindungsachse (100) und an einem tragenden Rahmen (3) befestigt sind, der am Rahmen des genannten Anhängers befestigt werden kann. Der tragende Rahmen (3) umfasst eine rechte Längsplatte (13) und eine linke Längsplatte (14), die vorne starr durch einen Querträger (15) verbunden sind, wobei die rechte Längsplatte (13) und die linke Längsplatte (14) direkt am Rahmen des genannten Anhängers befestigt werden können. Der Querträger (15) weist ein zentrales Kugelgelenk (11) auf, an dem der genannte mindestens eine Arm (10) angebracht ist, wobei der Arm (10) eine dreieckige Struktur umfasst, die über das genannte Kugelgelenk (11) am Querträger (15) angeschlagen ist und eine gegenüberliegende Seite (19) aufweist, die starr an der genannten starren Verbindungsachse (100) befestigt ist.

2. Die starre Achsanordnung (1) eines Anhängers eines Fahrzeugs nach dem vorhergehenden Anspruch, **dadurch gekennzeichnet, dass** die rechte (13) und linke (14) Längsplatte parallel zueinander und orthogonal zur starren Verbindungsachse (100) verlaufen.

3. Die starre Achsanordnung (1) eines Anhängers eines Fahrzeugs nach einem der vorhergehenden Ansprüche, **dadurch gekennzeichnet, dass** die rechten (4) und linken (5) Hydraulikfederzylinder jeweils ein oberes Ende (6, 7) aufweisen, das schwenkbar an der rechten Längsplatte (13) bzw. an der linken Längsplatte (14) befestigt ist, sowie ein unteres Ende (8, 9), das an der starren Verbindungsachse (100) schwenkbar angebracht ist.

4. Die starre Achsanordnung (1) eines Anhängers nach einem der vorhergehenden Ansprüche, **dadurch gekennzeichnet, dass** die Querstrebe (12) ein oberes Ende (16) aufweist, das an einer der rechten oder linken Längsplatten (13, 14) schwenkbar befestigt ist, und ein unteres Ende (17), das an der starren Achsanordnung (1) schwenkbar angebracht ist.

5. Die starre Achsanordnung (1) eines Anhängers nach einem der vorhergehenden Ansprüche, **dadurch gekennzeichnet, dass** die Querstrebe (12) hinter der starren Verbindungsachse (100) positioniert ist.

6. Die starre Achsanordnung (1) eines Anhängers eines Fahrzeugs nach dem vorhergehenden Anspruch, **dadurch gekennzeichnet, dass** die Querstrebe (12) schwenkbar an einer der rechten (13) oder linken (14) Längsplatte hinter dem oberen Schwenkpunkt eines der rechten (4) oder linken (5) Zylinder an der rechten (13) oder linken (14) Längsplatte angebracht ist.

7. Die starre Achsanordnung (1) eines Anhängers eines Fahrzeugs nach einem der Ansprüche 3 bis 6, **dadurch gekennzeichnet, dass** die unteren Enden (8, 9) der Zylinder (4, 5) unterhalb und vor der starren Verbindungsachse (100) positioniert sind.

8. Die starre Achsanordnung (1) eines Anhängers eines Fahrzeugs nach einem der vorhergehenden Ansprüche 3 bis 7, **dadurch gekennzeichnet, dass** die unteren Enden (8, 9) und die oberen Enden (6, 7) der Zylinder (4, 5) mit orthogonalen Schwenkachsen befestigt sind.

9. Die starre Achsanordnung (1) eines Anhängers eines Fahrzeugs nach dem vorhergehenden Anspruch, **dadurch gekennzeichnet, dass** die Schwenkachse der unteren Enden (8, 9) der Zylinder (4, 5) parallel zur starren Achsanordnung (1) verläuft und die Schwenkachse der oberen Enden (6, 7) der Zylinder (4, 5) parallel zur Längsachse der Längsplatten (13, 14) ist.

## Revendications

1. Dispositif d'essieu rigide (1) avec suspension hydraulique (2) pour une remorque de véhicule, comprenant au moins un essieu de liaison rigide (100) d'au moins une paire de roues motrices, au moins un bras de liaison avant (10) dudit essieu de liaison rigide (100), au moins une paire de vérins de suspension hydrauliques droit (4) et gauche (5), et au moins une barre transversale (12) réagissant aux charges axiales transversales agissant sur ledit essieu de liaison rigide (100), **caractérisé en ce que** ledit au moins un bras (10), ladite au moins une paire de vérins de suspension hydrauliques (4, 5) et ladite au moins une barre transversale (12) sont fixés réciproquement audit essieu de liaison rigide (100) et à un cadre porteur (3) fixable au châssis de ladite remorque, ledit cadre porteur (3) comprenant une plaque longitudinale droite (13) et une plaque longitudinale gauche (14) qui sont rigidement reliées à l'avant par un élément transversal (15), ladite plaque longitudinale droite (13) et ladite plaque longitudinale gauche (14) étant directement fixables au châssis de ladite remorque, ledit élément transversal (15) ayant une articulation sphérique centrale (11) à laquelle est relié ledit au moins un bras (10), ledit bras (10) comprenant une structure triangulaire articulée audit élément transversal (15) par ladite articulation sphérique (11) et un côté opposé (19) relié de manière rigide audit essieu de liaison rigide (100).

2. Dispositif d'essieu rigide (1) d'une remorque de véhicule selon la revendication précédente, **caractérisé en ce que** lesdites plaques longitudinales droite (13) et gauche (14) sont parallèles l'une à l'autre et orthogonales audit essieu de liaison rigide (100).

3. Dispositif d'essieu rigide (1) d'une remorque de véhicule selon l'une des revendications précédentes, **caractérisé en ce que** lesdits vérins de suspension hydrauliques droit (4) et gauche (5) ont chacun une extrémité supérieure (6, 7) articulée respectivement à ladite plaque longitudinale droite (13) et à ladite plaque longitudinale gauche (14), et une extrémité inférieure (8, 9) articulée audit essieu de liaison rigide (100).

4. Dispositif d'essieu rigide (1) d'une remorque selon l'une des revendications précédentes, **caractérisé en ce que** ladite barre transversale (12) a une extrémité supérieure (16) articulée à l'une desdites plaques longitudinales droite et gauche (13, 14) et une extrémité inférieure (17) articulée audit dispositif d'essieu rigide (1).

5. Dispositif d'essieu rigide (1) d'une remorque selon l'une des revendications précédentes, **caractérisé en ce que** ladite barre transversale (12) est positionnée derrière ledit essieu de liaison rigide (100).

6. Dispositif d'essieu rigide (1) d'une remorque d'un véhicule selon la revendication précédente, **caractérisé en ce que** ladite barre transversale (12) est articulée à l'une desdites plaques longitudinales droite (13) ou gauche (14) derrière le point de pivotement supérieur de l'un desdits vérins droit (4) ou gauche (5), respectivement sur ladite plaque longitudinale droite (13) ou gauche (14).

7. Dispositif d'essieu rigide (1) d'une remorque d'un véhicule selon l'une des revendications 3 à 6, **caractérisé en ce que** lesdites extrémités inférieures (8, 9) desdits vérins (4, 5) sont positionnées en dessous et devant ledit essieu de liaison rigide (100).

8. Dispositif d'essieu rigide (1) d'une remorque d'un véhicule selon l'une des revendications précédentes de 3 à 7, **caractérisé en ce que** lesdites extrémités inférieures (8, 9) et lesdites extrémités supérieures (6, 7) desdits vérins (4, 5) sont articulées avec des axes de pivotement orthogonaux.

9. Dispositif d'essieu rigide (1) d'une remorque d'un véhicule selon la revendication précédente, **caractérisé en ce que** l'axe de pivotement desdites extrémités inférieures (8, 9) desdits vérins (4, 5) est parallèle audit dispositif d'essieu rigide (1) et que l'axe de pivotement desdites extrémités supérieures (6, 7) desdits vérins (4, 5) est parallèle à l'axe longitudinal desdites plaques longitudinales (13, 14).
